# EUROPEAN PATENT APPLICATION

(11) **EP 4 310 777 A1**
(43) Date of publication of application: **24.01.2024**
(21) Application number: 22771232.0
(22) Date of filing: 09.03.2022
(51) Int. Cl.: G06T 7/00, G06T 7/32, G01N 33/48

(54) **SAMPLE IMAGE REGISTRATION METHOD, COMPUTER PROGRAM, AND STORAGE MEDIUM**

(30) Priority: 19.03.2021 JP 2021045966
(71) Applicant: SCREEN Holdings Co., Ltd., Kyoto-shi, Kyoto 602-8585 (JP)
(72) Inventor: HIRAI, Maki, Kyoto-shi, Kyoto 602-8585 (JP); OGI, Hiroshi, Kyoto-shi, Kyoto 602-8585 (JP); FURUTA, Tomoyasu, Kyoto-shi, Kyoto 602-8585 (JP)
(74) Representative: Goddar, Heinz J.
(86) International application number: PCT/JP2022/010219
(87) International publication number: WO 2022/196481

(57) **Abstract**

A specimen image registration according to the invention includes selecting at least one third image different from a first image and a second image which are target images from the plurality of specimen images (S205), obtaining a registration amount between the first image and the third image and a registration amount between the second image and the third image (S206, S207), and obtaining a registration amount between the first image and the second image based on the registration amount between the first image and the third image and the registration amount between the second image and the third image (S208). It is possible to improve a success rate of registration even if the specimen images obtained by a plurality of types of staining are largely different in stained state.

## Description

### [Technical Field]

This invention relates to an image analysis technique for evaluating a stained biological specimen, particularly to a registration technique between a plurality of images obtained by imaging the same specimen.

### [Background Art]

In the field of immunohistochemistry of recent years, not only a specimen is seen as a group of cells, but also a so-called single-cell analysis focusing individual cells constituting the specimen is drawing attention. This is a technique for measuring expression levels, positions and the like of a biological substance such as a protein or its related substance on a cell-by-cell basis. As a typical analysis technique, flow cytometry for dispersing cells in a fluid and quantitatively measuring each cell has been widely performed.

On the other hand, along with the sophistication of the image analysis technique, image cytometry for imaging a tissue specimen as it is without dividing the tissue specimen and analyzing the tissue specimen by an image processing has also been put to practical use. In an analysis technique by a multiple immunostaining method using the image cytometry, a plurality of specimen images respectively corresponding to a plurality of types of staining are obtained by repeating staining, imaging and destaining for a biological specimen such as a tissue section collected from a living organism or an artificially cultured cell tissue.

In this technique, to enable cross reference between a plurality of specimen images, to which different types of staining were applied, the specimen images need to be aligned (registration). For example, in a technique described in PTL 1, registration between two images of the specimen, to which mutually different types of staining were applied, is performed as follows. First, out of the two images, unreliable parts due to the deformation of the tissue and the like are extracted and excluded. A positional relationship between the two images is specified by detecting parts corresponding to each other from the remaining reliable parts using an image processing technique.

### [Citation List]

### [Patent Literature]

[PTL 1] JP2019-032314A

### [Summary of Invention]

### [Technical Problem]

In the case of multiple immunostaining, in which a multitude of types of staining methods are applied to the same specimen, a stained state including colored parts by the staining and the gradation and hue thereof variously differs in the specimen depending on the type of staining. Thus, for example, in the case of automatically performing the registration by an image processing between two randomly selected specimen images, it may not be possible to detect parts corresponding to each other if there is a large difference in the stained state between the selected specimen images. In such a case, the registration possibly fails as a result.

The registration failure mentioned here means that the positional relationship derived by the image processing between the two specimen images does not correctly represent a positional relationship in the actual specimen. The positional relationship between the specimen images can be quantitatively expressed using an appropriate registration amount. The registration amount can be defined as a value indicating, for example, the magnitude of a relative position shift amount of the both or the magnitude of a movement amount of the other image with respect to one image necessary to correct a position shift.

### [Solution to Problem]

This invention was developed in view of the above problem and aims to improve a success rate of registration between specimen images largely different in stained state in a technique for performing registration between a plurality of specimen images obtained by a plurality of types of staining.

One aspect of this invention is directed to a specimen image registration method for performing registration between a first image and a second image different from each other, out of a plurality of specimen images obtained by applying a plurality of types of staining to a biological specimen and imaging the stained biological specimen for each staining. To accomplish the above aim, the invention is directed to a specimen image registration method including selecting at least one third image different from the first and second images from the plurality of specimen images, obtaining each of a registration amount between the first and third images and a registration amount between the second and third images, and obtaining a registration amount between the first and second images based on the registration amount between the first and third images and the registration amount between the second and third images.

In the invention thus configured, even if there is a large deviation in stained state between the first image and the second image and corresponding parts cannot be found out, a success rate of registration is improved by mediating the third image different from these first and second images. That is, if the registration succeeds between the first and third images and between the second and third images, the registration between the first and second images can be indirectly performed from the obtained registration amounts.

### [Advantageous Effects of Invention]

As described above, according to the invention, the success rate of the registration can be improved by mediating the third image different from the first and second images even if there is a large deviation in stained state between the first and second images and corresponding parts cannot be found out.

The above and further objects and novel features of the invention will more fully appear from the following detailed description when the same is read in connection with the accompanying drawing. It is to be expressly understood, however, that the drawing is for purpose of illustration only and is not intended as a definition of the limits of the invention.

### [Brief Description of Drawings]

[FIG. 1] FIG. 1 is a flow chart showing a flow of an image cytometry technique to which the invention is applicable.
[FIG. 2A] FIG. 2A is a view showing examples of the specimen image handled in this embodiment.
[FIG. 2B] FIG. 2B is a view showing examples of the specimen image handled in this embodiment.
[FIG. 2C] FIG. 2C is a view showing examples of the specimen image handled in this embodiment.
[FIG. 2D] FIG. 2D is a view showing examples of the specimen image handled in this embodiment.
[FIG. 2E] FIG. 2E is a view showing examples of the specimen image handled in this embodiment.
[FIG. 3A] FIG. 3A is a diagram showing the principle of the registration process.
[FIG. 3B] FIG. 3B is a diagram showing the principle of the registration process.
[FIG. 4A] FIG. 4A is a diagram showing a registration process in this embodiment.
[FIG. 4B] FIG. 4B is a diagram showing a registration process in this embodiment.
[FIG. 5] FIG. 5 is a flow chart showing the registration process according to the invention.
[FIG. 6A] FIG. 6Ais a diagram schematically showing the reference image and the target image in a feature space.
[FIG. 6B] FIG. 6B is a diagram schematically showing the reference image and the target image in a feature space.
[FIG. 6C] FIG. 6C is a diagram schematically showing the reference image and the target image in a feature space.
[FIG. 7] FIG. 7 is a diagram showing an example of evaluation results of this embodiment.
[FIG. 8A] FIG. 8A is a diagram showing another case example of the intermediate image selection method.
[FIG. 8B] FIG. 8B is a diagram showing another case example of the intermediate image selection method.

### [Description of Embodiments]

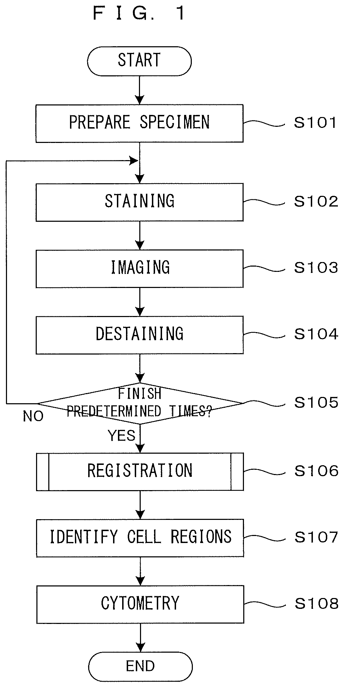

FIG. 1 is a flow chart showing a flow of an image cytometry technique, to which the invention is applicable. First, a biological specimen to be evaluated is prepared (Step S101). The biological specimen is prepared by slicing a tissue section collected from a living organism, an artificially cultured tissue or the like to an appropriate thickness and fixing the sliced tissue on an appropriate carrier such as a slide glass. Staining by an appropriate staining method (Step S 102), imaging (Step S 103) and destaining (Step S 104) are repeatedly performed for this biological specimen a predetermined number of times corresponding to the number of types of staining (Step S105). That is, the specimen is multiple immunostained and a plurality of specimen images corresponding to the respective types of staining are obtained by performing imaging for each type of staining.

Next, registration is performed to align between the plurality of specimen images (Step S106). Because the respective operations of staining, imaging and destaining are repeatedly performed, actual imaging regions are mutually shifted between the plurality of specimen images even if the same part of the same specimen are imaged. A process for grasping such position shift amounts between the images and enabling the superimposition of the images by eliminating the influence of the position shifts is a registration process. This process is a process, to which a specimen image registration method according to the invention is suitably applicable, and specific processing contents as one embodiment thereof are described in detail later.

Subsequently, cell regions of all the specimen images are identified (Step S107). Identification can be performed by, after the cell regions occupied by the individual cells are identified from one or more specimen images, applying those regions to other specimen images aligned with each other. Then, cytometry for applying a quantitative analysis to the individual cells is performed (Step S108). Various methods for the identification of the cell regions and cytometry are known. Since these can be appropriately selected and applied also in this embodiment, these are not described in detail.

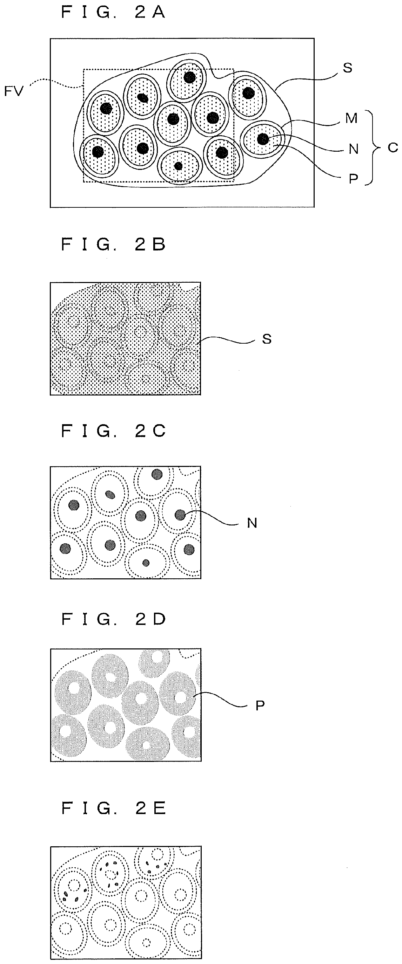

FIGS. 2A to 2E are views showing examples of the specimen image handled in this embodiment. FIG. 2A is a view schematically showing an example of a biological specimen. Here, a tissue specimen S including a plurality of cells C is considered. Each cell C is composed of a cell membrane M, a cytoplasm P, a cell nucleus N and the like. In multiple immunostaining (immunohistochemical staining), a plurality of types of staining methods for selectively staining a specific substance, out of biological substances constituting the cells C and the tissue including those cells C, are sequentially applied to the specimen.

By imaging the specimen such that at least a part of the specimen comes within an imaging field of view FV for each type of staining, a plurality of specimen images are obtained. In each of those specimen images, a specific biological substance is stained. A stained state including stained parts, a density and the like varies depending on the type of staining. FIG. 2B shows an example in which the entire tissue specimen S is uniformly stained, and FIG. 2C shows an example in which only the cell nuclei N are selectively stained. Further, FIG. 2D shows an example in which the cytoplasms P are selectively stained. Further, FIG. 2E shows an example in which a specific biological substance contained only in some cells are stained.

For example, to analyze a ratio of cells in which a specific biological substance is expressed or a relationship of expression patterns of a plurality of biological substances, images of a specimen stained by these various staining methods need to be referred to each other. To that end, a positional relationship between the respective specimen images needs to be clear. For this purpose, the registration process (Step S106 of FIG. 1) between the specimen images is performed.

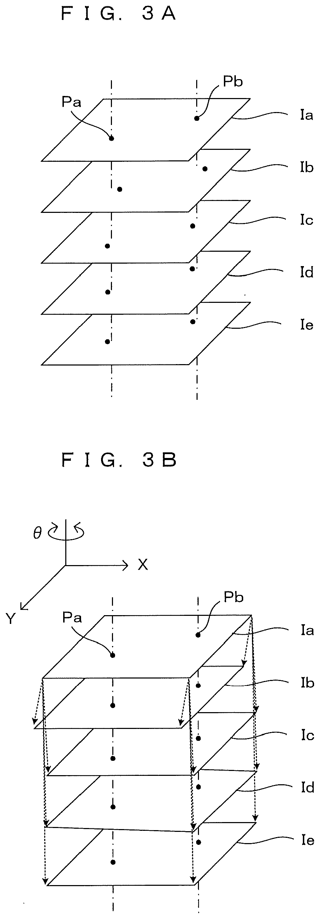

FIGS. 3A and 3B are diagrams showing the principle of the registration process. Since a plurality of specimen images are obtained by imaging the same region of the same specimen, imaging fields of view thereof desirably coincide on the specimen. However, due to the nature of an operation of repeating staining, imaging and destaining for the specimen, a certain level of position shifts and distortions are unavoidable.

In principle, if the positions of mutually corresponding regions between two images are specified in the respective images, a relative positional relationship of the images can be uniquely determined. For example, a position shift amount between the images in a direction along an image plane and a rotation direction about an axis perpendicular to this plane can be obtained if at least two points corresponding to each other in the both images are specified. For example, as shown in FIG. 3A, a positional relationship of the respective specimen images can be specified from the positions (shown by black points in FIG. 3A) of two points Pa, Pb corresponding to each other on a plurality of specimen images Ia, Ib, Ic, Id, Ie, ..., in the images. The purpose of the registration is accomplished by aligning two images such that both of those two points overlap.

For example, as shown in FIG. 3B, based on one specimen image Ia, the other specimen images can be moved by combining movements in an X direction parallel to the image plane and a Y direction orthogonal to the X direction and rotation in a θ direction about an axis perpendicular to an XY plane. By doing so, such an alignment that the points Pa, Pb overlap each other is possible.

However, the stained state in each specimen image is variously different. Thus, a situation where a biological substance clearly stained in a certain specimen image is hardly visible in the other specimen images possibly occurs. For example, there is a case where no correlation is seen at all between a result of a staining method for staining a certain type of protein and a result of the staining method by which this protein is not colored. Therefore, it is possible that points or regions corresponding to each other cannot be specified between two specimen images and the registration fails.

Various image processing techniques such as a known pattern matching technique can be applied as a specific method of the registration process, i.e. as a technique for detecting regions corresponding to each other between two images and specifying a positional relationship between the both images. If the registration is tried between two images having substantially no correlation using these techniques, a certain result is returned. However, that result does not necessarily correctly represent a positional relationship on the specimen. Further, depending on a combination of stained states and images, it may not be possible in some cases to find out a significant common point between the images. A state where information representing a correct positional relationship cannot be obtained as a result of the registration by an image processing is generally called a "registration failure" here.

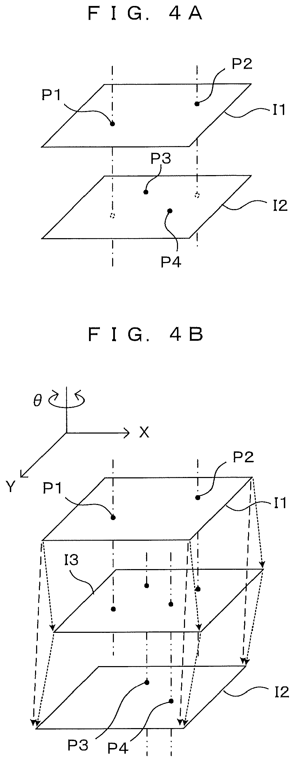

FIGS. 4A and 4B are diagrams showing a registration process in this embodiment. A case is considered where characteristic two points P1, P2 in a first specimen image I1 are not detected in a second specimen image I2, whereas characteristic two points P3, P4 in the specimen image I2 are not detected in the first specimen image I1 as shown in FIG. 4A. In such a case, regions corresponding to each other between the images cannot be detected and the registration fails with a high probability.

In this embodiment, as shown in FIG. 4B, a third specimen image I3 having intermediate characteristics between the specimen images I1, I2 is selected out of specimen images other than the specimen images I1, I2 in addition to the two specimen images I1, I2, and the registration is tried with this image I3 interposed between the specimen images I1, I2. Specifically, the registration is performed based on common features between the first and third specimen images I1, I3. On the other hand, the registration is performed based on common features between the second and third specimen images I2, I3.

As indicated by dotted line arrows in FIG. 4B, it is assumed that a positional relationship of the first and third specimen images I1, I3 and a positional relationship of the second and third specimen images I2, I3 could be specified. Then, a positional relationship of the first and second specimen images I1, I2 can be indirectly expressed using that result as shown by broken line arrows in FIG. 4B. Specific contents of the registration process of this embodiment based on this principle are described below. Note that the third specimen image may be referred to as an "intermediate image" below.

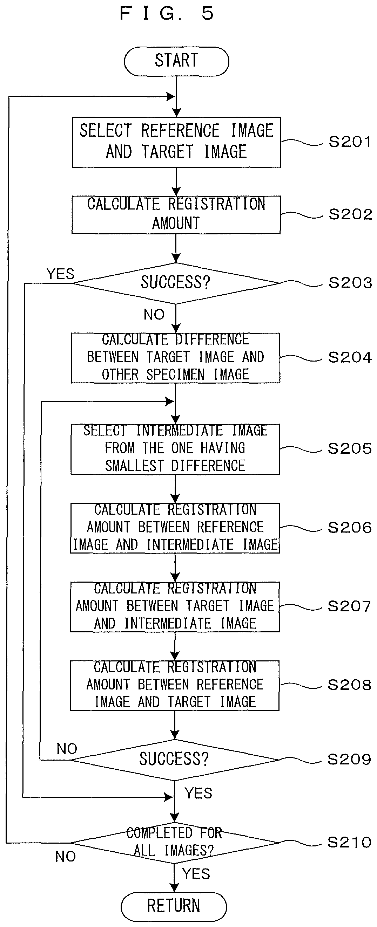

FIG. 5 is a flow chart showing the registration process according to the invention. This process is a process corresponding to Step S106 of FIG. 1 and can be realized, for example, by a computer device implementing a program prepared in advance. A device having a general hardware configuration and commercially available as a personal computer can be applied as the computer device for performing this process. Specifically, a device provided with an arithmetic processing unit, a storage means such as a memory and a storage, an input device and a display device can be used.

First, out of a plurality of specimen images, one image serving as a reference of the registration is selected as a reference image and another image as a target of the registration with the reference image is selected as a target image (Step S201). Here, a case is considered where the first specimen image I1 is the reference image and the second specimen image I2 is the target image in association with FIG. 4B. Note that, in the sense of obtaining a relative positional relationship between two images, the selection of which image as the reference image is technically equivalent.

Selection criteria of the reference image and the target image are arbitrary. For example, one specimen image relating to a specific staining method may be determined as the reference image in advance. In this case, one specimen image randomly selected from the other specimen images can be the target image. Further, both the reference image and the target image may be randomly selected. However, a combination needs to be so selected that mutual relative positional relationships can be finally calculated for all the images to be analyzed. Further, the reference image and the target image may be, for example, selected in accordance with an order determined in advance. Further, for example, an operation input of an operator to select the reference image and the target image from specimen images displayed on the display device may be received.

Between the reference image and the target image selected in this way, a registration amount quantitatively representing a positional relationship between the both images is obtained. For example, a relative position shift amount between the two images can be set as the registration amount. If the images are aligned by movements in the X direction, Y direction and θ direction as shown in FIGS. 2B and 4B, each of relative movement amounts in the X direction, Y direction and θ direction to align the reference image and the target image can be set as the registration amount between the both images. A technique for obtaining the registration amount can be appropriately selected from known ones and applied.

Next, whether or not the registration has been succeeded is determined (Step S203). If there is any common or similar feature between the reference image and the target image, the registration for obtaining a correct positional relationship between the both can be made successful, using that feature. On the other hand, if such a feature cannot be properly found out, the registration may fail as described above. The following operation differs depending on the success or failure of the registration.

Various judgment criteria can be used as those for judging the success or failure of the registration. For example, in the case of performing the registration using the pattern matching technique, the success or failure of the registration can be judged based on a magnitude relation between a matching score and an appropriately set threshold. Further, for example, the operator may be made to judge the success or failure by displaying a result of the registration on the display device.

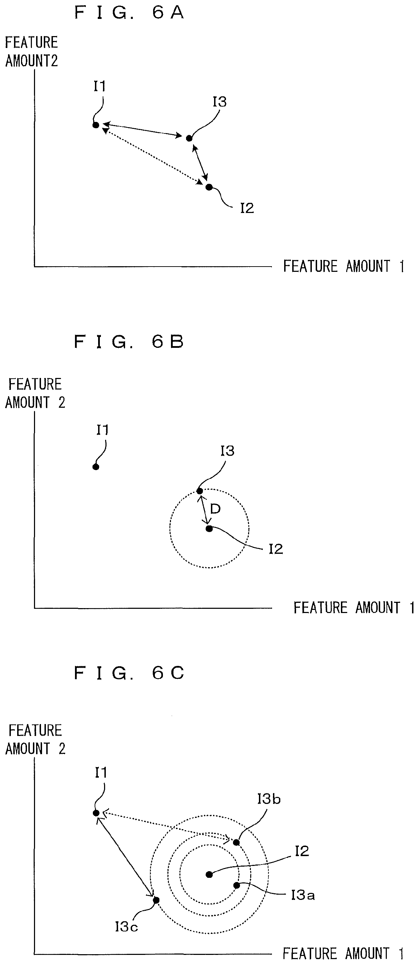

If the failure of the registration was determined (NO in Step S203), Steps S204 to S209 are performed. On the other hand, if the registration succeeded (YES in in Step S203), these processing steps are skipped. The process in Steps S204 to S209 is the registration process with another image mediated based on the principle described above. The specific contents of the process are described below with reference to FIGS. 5 and 6A to 6C.

FIGS. 6A to 6C are diagrams schematically showing the reference image and the target image in a feature space. Each of the specimen images including the reference image and the target image can be associated with one point in the feature space by expressing image contents by various feature amounts. For the convenience of principle description, each graph is shown as a two-dimensional feature space using feature amounts 1 and 2. However, the feature space is more generally defined as a multidimensional hyperspace using a multitude of types of feature amounts.

Note that, although an idea of the feature space is introduced to describe a concept of this embodiment here, this does not mean that feature amounts are used in an actual process. Thus, the types of the feature amounts are also not particularly specified. Although only the images relating to the process are plotted in the graphs to avoid complexity, each of the other specimen images should be also plotted at an appropriate position in the feature space according to the image contents thereof.

Two images at relatively close positions in the feature space have a high degree of similarity in the image contents thereof and a success rate of the registration can be said to be high. On the other hand, there is a large deviation in the image contents between two images at distant positions in the feature space and a probability of failing the registration is higher.

A technical idea of the registration process of this embodiment is to introduce the third image I3 as an intermediate image if a distance between the reference image I1 and the target image I2 in the feature space is large and direct registration is not possible as shown in FIG. 6A. If the registration is possible between the reference image I1 and the intermediate image I3 and between the intermediate image I3 and the target image I2, the registration indirectly succeeds between the reference image I1 and the target image I2.

From this, the intermediate image I3 is required to be an image at an intermediate position between the reference image I1 and the target image I2 in the feature space. That is, in the feature space, a distance between the reference image I1 and the intermediate image I3 and a distance between the target image I2 and the intermediate image I3 are both required to be smaller than the distance between the reference image I1 and the target image I2.

Accordingly, in this embodiment, another specimen image near the target image I2 is searched in the feature space. If such an image is present, a probability of succeeding the registration between this specimen image and the target image I2 is thought to be very high. Specifically, as shown in FIG. 6B, another specimen image at a shortest distance D from the target image I2 is searched in the feature space and that image is set as a tentative intermediate image I3.

The distance in the feature space can be, strictly speaking, expressed by a Mahalanobis distance calculated based on the values of the feature amounts. A method for searching the intermediate image from the thus obtained distance is also considered. However, a specific method of this embodiment, which can make the registration successful with a sufficiently high probability while being is a relatively simple method, is described as an example here.

In this embodiment, differences from the target image I2 are calculated for all the other specimen images except the reference image I1 and the target image I2 (Step S204). Note that, to avoid a large difference appearing due to a position shift between the images, an image processing as a pre-processing is preferably performed prior to the calculation of the differences. A reduction of image size, a grayscale conversion, a contrast enhancement, various filter processings and the like can be, for example, applied as the pre-processing. In this way, it can be also avoided that minor differences due to the smear of the specimen, noise and the like affect the processing.

For example, a value obtained by calculating a difference in luminance value between two images on a pixel-by-pixel basis and totaling absolute values of the differences for all the pixels can be used as an index value (hereinafter, referred to as a "difference value") quantitatively representing the difference. Here, the difference in luminance value is used as an index value of a degree of similarity between the two images. However, the "similarity" mentioned here is similarity between the shapes of stained patterns (arrangements of stained regions and unstained regions) and does not mean that staining densities are about the same. Accordingly, to suppress an influence on results by a difference in staining density, an appropriate evaluation value standardized in consideration of the density of the entire image, a density variation and the like may be introduced in place of the above difference value.

It can be tentatively thought that a degree of similarity of the image to the target image I2 is higher as the image has a smaller difference value obtained in this way. Accordingly, the images are selected as the tentative intermediate images I3 from the one having the smallest obtained difference value (Step S205). Then, the registration amounts are calculated between the reference image I1 and the intermediate image I3 and between the target image I2 and the intermediate image I3 (Steps S206, S207).

From those results, the registration amount between the reference image I1 and the target image I2 is calculated (Step S208). For example, movement amounts of the target image I2 in the X direction, Y direction and θ direction necessary to align the target image I2 with the reference image I1 with the reference image I1 fixed can be respectively obtained by adding up movement amounts of the intermediate image I3 in the X direction, Y direction and θ direction necessary to align the intermediate image I3 with the reference image I1 with the reference image I1 fixed and movement amounts of the target image I3 in the X direction, Y direction and θ direction necessary to align the target image I2 with the intermediate image I3 with the intermediate image I3 fixed.

From the results obtained in this way, whether or not the registration between the reference image I1 and the target image I2 has been successful is judged (Step S209). Success/failure judgment criteria can be similar to those in Step S203. For example, it is possible to apply a method for setting a threshold for a difference value between the reference image I1 and the target image I2 after the alignment based on the calculated registration amount or a value such as a matching score in pattern matching and judging a success or failure based on a comparison with the threshold. Further, the images superimposed after the alignment may be, for example, displayed on the display device and a success/failure determination by the operator may be received.

The intermediate image I3 is selected as an image having a relatively high degree of similarity to the target image I2. Thus, the registration is expected to be possible between this image and the target image I2 with a high probability. On the other hand, this shall not apply to the registration with the reference image I1. That is, the registration may fail if a distance between the selected intermediate image I3 and the reference image I1 in the feature space is not sufficiently small and, in some cases, is longer than the distance between the reference image I1 and the target image I2.

If a failure of the registration between the reference image I1 and the intermediate image I3 is judged (NO in Step S209), return is made to Step S205 and an image having the next smallest difference value is newly selected as the intermediate image I3. Then, the registration is tried in a manner similar to that described above.

As shown in FIG. 6C, it is assumed that several images I3a, I3b, I3c, ... are extracted in the increasing order of the distance from the target image I2, out of the images located around the target image I2 in the feature space. Under such a situation where there are a plurality of combinations of images similar to each other and the registration succeeds between a plurality of pairs of the images, several of those images are at positions closer to the reference image I1 than the target image I2 and expected to be at positions where the registration with the reference image I1 can succeed.

Thus, by trying the registration several times while the images selected in the increasing order of the difference value are successively tentatively set as the intermediate image I3, a success probability of the registration between the reference image I1 and the target image I2 can be increased.

If a success of the registration is determined in Step S203 or S209, it is judged whether or not the registration has been completed for all the specimen images (Step S210). If there remains any image, for which the registration has not been completed, a reference image and a target image are newly selected (Step S201) and the above process is repeated. In this case, the specimen image for which the registration with another specimen image has been completed is desirably selected as the reference image to enable the calculation of a relative positional relationship for all the images to be finally analyzed. In this way, the registration can be completed for all the specimen images.

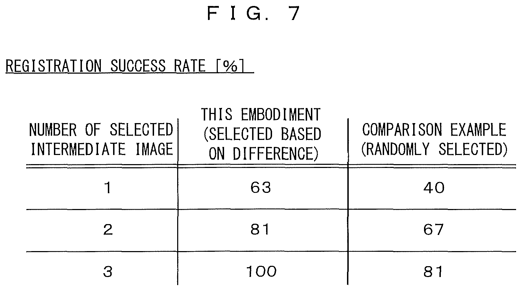

FIG. 7 is a table showing an example of evaluation results of this embodiment. The inventors of this application prepared a total of 16 image sets each composed of six or twelve specimen images including image pairs for which the registration could not be directly performed. The registration process of this embodiment was performed for each of those image sets and the following result was obtained. Note that the success or failure of the registration was judged by a skilled person visually evaluating the superimposed images as a result of the registration. Here, a case where a position shift amount between the images is suppressed substantially to three pixels was judged as a success.

According to this, a registration success rate when the number of the selected intermediate images was limited to one was about 63 % and the success rate was improved to about 81 % if the number of the selected intermediate images was set to two. Further, if it was allowed to select up to three intermediate images, the registration could succeed with a probability of substantially 100 %.

On the other hand, as described as a comparison example, in the case of randomly selecting the intermediate image from the images other than the reference image and the target image, a success rate increases by increasing the number of the intermediate images, but falls short of that obtained by the method of this embodiment. This result indicates that this embodiment has a function of improving the success rate of the registration.

As described above, in the registration process of this embodiment, the intermediate image I3 is mediated between the reference image I1 and the target image I2 for which the registration cannot be directly performed. In this way, the registration is attempted indirectly via the intermediate image I3. By doing so, the success rate of the registration can be improved even between the images which have a low degree of similarity therebetween and for which the registration cannot be directly performed.

As described above, in the above embodiment, the tissue specimen S corresponds to a "biological specimen" of the invention. Further, in the above embodiment, the reference image I1 corresponds to a "first image" of the invention, the target image I2 corresponds to a "second image" of the invention, and the intermediate image I3 corresponds to a "third image" of the invention. A "specimen image registration method" of the invention is applied to the registration process shown in Step S106 of FIG.3 and FIG. 5.

Note that the invention is not limited to the embodiment described above and various changes other than the aforementioned ones can be made without departing from the gist of the invention. For example, in the above embodiment, the intermediate image I3 is searched based on the difference value from the target image I2. However, as described above, the replacement of the relationship of the reference image and the target image is technically equivalent. In that sense, similar effects are obtained even if an intermediate image is searched near the reference image.

Further, in the above embodiment, the reference image I1 is not particularly considered in the selection of the intermediate image I3. However, as described below, it is also possible to select the intermediate image I3 using a selection method considering the features of not only the target image I2, but also the reference image I1.

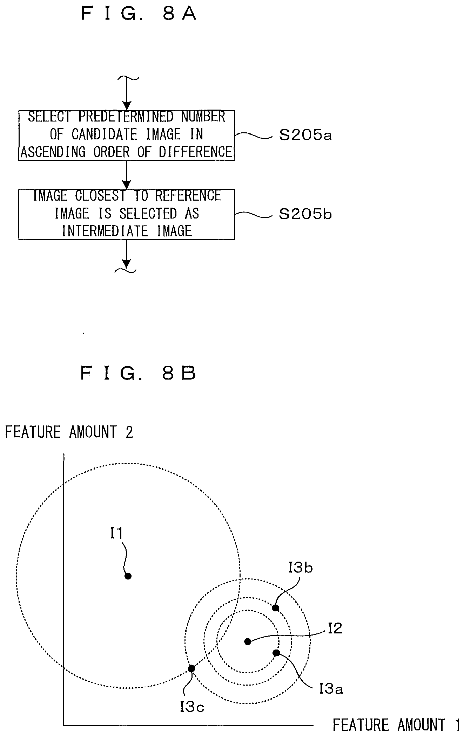

FIGS. 8A and 8B are diagrams showing another case example of the intermediate image selection method. This modification can be realized by replacing Step S205, out of the respective processing steps of the registration process shown in FIG. 5, by Steps S205a and S205b shown in FIG. 8A. In Step S205a, a predetermined number of images are selected as candidate images of the intermediate image in the increasing order of the difference value from the target image I2, out of the specimen images except the reference image I1 and the target image I2. FIG. 8B shows an example in which three images I3a, I3b and I3c are selected as the candidate images.

Subsequently, differences between these candidate images and the reference image I1 are obtained, and the candidate image having the smallest difference value is selected as the intermediate image I3 (Step S205b). Then, as shown in FIG. 8B, the image (image I3c in this example) closest to the reference image I1, i.e. having a highest degree of similarity to the reference image I1, is selected as the intermediate image I3. By selecting the image having a high degree of similarity when viewed respectively from the reference image I1 and the target image I2 as the intermediate image I3, there is a possibility of further improving the success rate of the registration. Also in this case, a plurality of the third images I3 may be selected.

Further, a case where a shift between the images is expressed by a parallel movement and a rotational movement was taken up in the description of the above embodiment. However, besides this, a more complicated position shift such as a position shift between images due to a distortion during imaging or of the specimen itself also possibly occurs. More generally, a positional relationship between two images can be expressed using transformation matrices even if such a position shift is present. A registration amount between the first and second images I1 and I2 in this case can be expressed by a product of a transformation matrix from the first image I1 to the image I3 and a transformation matrix from the third image I3 to the second image I2.

As the specific embodiment has been illustrated and described above, the third images can include, for example, an image having a highest degree of similarity to the second image, out of the plurality of specimen images except the first and second images in the specimen image registration method according to the invention. By doing so, the registration can be made successful with a high probability at least between the second and third images. In this way, it can be avoided that an image similar to neither one of the first and second images and likely to cause a failure in the registration for the both images is selected as the third image.

Further, for example, the third images can include an image having the smallest difference from the second image, out of the plurality of specimen images except the first and second images. Between images having similar image contents, a difference of the both is small. That is, by using the difference between the images as a measure of the degree of similarity, similar images can be searched based on quantitative information.

In this case, for example, the difference from the second image can be calculated for each of the plurality of specimen images except the first and second images and the third image can be selected based on the calculation result. In this way, the image having the smallest difference from the second image can be uniquely selected out of the plurality of specimen images.

Further, for example, the difference can be evaluated by an index value based on a total value of absolute values of luminance differences between pixels at positions corresponding to each other between two images for all the pixels. By evaluating the difference in the entire image, a comparison on a pixel-by-pixel basis can be handled as a more macroscopic comparison.

Further, for example, a plurality of third images may be selected in ascending order of the difference, out of the specimen images. The images close to the second image are selected as the third images, whereas similarity to the first image is not considered. Thus, the image having the smallest difference from the second image is not necessarily an optimal image as the third image. By selecting the plurality of third images, a possibility of including the image having similarity to the first image among those is increased and the success rate of the registration can be improved.

In this case, for each of the plurality of third images, the registration amount between this image and the first image and the registration amount between this image and the second image may be respectively obtained. If combinations of the images, for which the registration amounts were calculated in this way, include the image having succeeded in the registration between the first and third images and between the second and third images, the registration between the first and second images can be performed using that result.

Further, for example, a plurality of images may be selected from the one having the smallest difference, out of the specimen images, and at least one may be set as the third image from the one having the smallest difference from the first image. If the third image is selected in consideration of similarity to not only the second image, but also the first image in this way, the success rate of the registration between the first and second images via the third image can be further improved.

Further, as the method for obtaining the registration amount between the first and second images, for example, a method for setting an amount obtained by combining a registration amount of the third image based on the first image and a registration amount of the second image based on the third image as a registration amount of the second image based on the first image is thought. In this way, the registration is possible between the first and second images. For example, in the case of expressing the registration amount using transformation matrices, the registration amount after the combination can be obtained by obtaining a product of the transformation matrices.

Note that the invention can be carried out as a computer program for causing a computer device to perform each step of the above specimen image registration method or as a computer-readable recording medium non-transitorily storing this computer program. Each of the above steps can be realized by the computer device having a general hardware configuration. By implementing the above computer program into an existing computer device, new functions can be added to this computer device.

Although the invention has been described with reference to specific embodiments, this description is not meant to be construed in a limiting sense. Various modifications of the disclosed embodiment, as well as other embodiments of the present invention, will become apparent to persons skilled in the art upon reference to the description of the invention. It is therefore contemplated that the appended claims will cover any such modifications or embodiments as fall within the true scope of the invention.

### [Industrial Applicability]

This invention is applicable to integrally analyze images obtained by staining and imaging the same tissue specimen a plurality of times in the research fields of medicine, biology and the like. For example, the invention is suitably applicable to analyze a multiple immunostained specimen on a single cell basis.

### [Reference Signs List]

- C: cell
- 11: reference image (first image)
- 12: target image (second image)
- 13: intermediate image (third image)
- S: tissue specimen (biological specimen)

## Claims

1. A specimen image registration method for performing registration between a first image and a second image different from each other, out of a plurality of specimen images obtained by applying a plurality of types of staining to a biological specimen and imaging the stained biological specimen for each staining, the specimen image registration method comprising:
selecting at least one third image different from the first image and the second image from the plurality of specimen images;
obtaining a registration amount between the first image and the third image and a registration amount between the second image and the third image; and
obtaining a registration amount between the first image and the second image based on the registration amount between the first image and the third image and the registration amount between the second image and the third image.

2. The specimen image registration method according to claim 1, wherein the third image selected out of the plurality of specimen images except the first image and the second image includes an image having a highest degree of similarity to the second image.

3. The specimen image registration method according to claim 1or 2, wherein an image having a smallest difference from the second image, out of the plurality of specimen images except the first image and the second image, is selected as the third image.

4. The specimen image registration method according to claim 3, wherein the difference from the second image is calculated for each of the plurality of specimen images except the first image and the second image and the third image is selected based on the calculation result.

5. The specimen image registration method according to claim 3 or 4, wherein the difference is evaluated by an index value based on a total value of absolute values of luminance differences between pixels at positions corresponding to each other between two images for all the pixels.

6. The specimen image registration method according to any one of claims 3 through 5, wherein a plurality of third images are selected in ascending order of the difference out of the specimen images.

7. The specimen image registration method according to claim 6, wherein for each of the plurality of third images, the registration amount between this image and the first image and the registration amount between this image and the second image are respectively obtained.

8. The specimen image registration method according to any one of claims 3 through 5, wherein a plurality of images are selected out of the specimen images in ascending order of the difference and, out of the selected images, at least one image in ascending order of a difference between this image and the first image is set as the third image.

9. The specimen image registration method according to any one of claims 1 through 8, wherein an amount obtained by combining a registration amount of the third image based on the first image and a registration amount of the second image based on the third image is set as a registration amount of the second image based on the first image.

10. A computer program, causing a computer device to perform each step of the specimen image registration method according to any one of claims 1 through 9.

11. A computer-readable recording medium, non-transitorily storing the computer program according to claim 10.
